**Europäisches Patentamt**

**European Patent Office**

**Office européen des brevets**

(19)

(11) Veröffentlichungsnummer : **0 371 277 B1**

(12)

# EUROPÄISCHE PATENTSCHRIFT

(45) Veröffentlichungstag der Patentschrift :
**19.08.92 Patentblatt 92/34**

(51) Int. Cl.$^5$ : **G01G 19/08**

(21) Anmeldenummer : **89120383.8**

(22) Anmeldetag : **03.11.89**

(54) **Vorrichtung zur Anzeige des Beladungszustandes von Lkw.**

(30) Priorität : **28.11.88 DE 3840112**

(43) Veröffentlichungstag der Anmeldung :
**06.06.90 Patentblatt 90/23**

(45) Bekanntmachung des Hinweises auf die
Patenterteilung :
**19.08.92 Patentblatt 92/34**

(84) Benannte Vertragsstaaten :
**AT BE CH DE ES FR GB GR IT LI LU NL SE**

(56) Entgegenhaltungen :
**CA-A- 1 212 418**
**FR-A- 2 356 914**
**US-A- 3 531 766**
**US-A- 3 634 635**

(56) Entgegenhaltungen :
**US-A- 3 955 636**
**US-A- 4 727 352**
**PATENT ABSTRACTS OF JAPAN, Band 6, Nr.**
**88 (P-118)[966], 26 mai 1982; & JP-A-57 24 828**
**(MASAICHI KIMOTO) 09-02-1982**

(73) Patentinhaber : **EDELHOFF POLYTECHNIK**
**GMBH & CO.**
**Heckenkamp 31**
**W-5860 Iserlohn 5 (DE)**

(72) Erfinder : **Sandkühler, Georg**
**Frönsbergerstrasse 10**
**W-5870 Hemer 6 (DE)**

(74) Vertreter : **Gossel, Hans K., Dipl.-Ing.**
**Lorenz-Seidler-Gossel et al**
**Widenmayerstrasse 23**
**W-8000 München 22 (DE)**

**Beschreibung**

Die Erfindung betrifft eine Beladvugzustandsanzeigerorrichtung von LKW, vorzugsweise des Gewichts der aufgenommenen Nutzlast von Müllsammelfahrzeugen, deren Fahrzeugrahmen relativ zu den Achsen beweglich und auf diesen durch Federn abgestützt sind, wobei ein den Abstand zwischen dem Fahrzeugrahmen und der oder den Achsen erfassenden Einrichtung vorgesehen ist, die ein Signal erzeugt, wenn der Abstand auf ein Maß verringert worden ist, das dem Gewicht der höchstzulässigen Nutzlast entspricht.

Beim Beladen von Lastkraftwagen läßt sich üblicherweise das Gesamtgewicht nur dann einhalten, wenn das Gewicht der Ladung bekannt ist. Da jedoch in vielen Fällen das Gewicht der Ladung unbekannt ist, kann nur eine grobe Abschätzung des tatsächlichen Gesamtgewichtes vorgenommen werden, was häufig dazu führt, daß das zulässige Gesamtgewicht überschritten oder aber auch nicht erreicht wird, was dann zur Folge hat, daß Ladekapazität verschenkt wird.

Das Problem, den jeweiligen Beladungszustand abzuschätzen, um einerseits Überladungen zu vermeiden und andererseits die vorhandene Ladekapazität in optimaler Weise auszunutzen, besteht insbesondere bei Müllsammelfahrzeugen, da die Beladung durch das Einschütten des Inhalts von Müllsammelbehältern erfolgt, ohne daß der Fahrer die Möglichkeit hat, das Gewicht der aufgenommenen Gesamtmenge des Mülls zu beurteilen. Wird vor Erreichen des zulässigen Gesamtgewichts eine Deponie oder Verbrennungsanlage angefahren, wird in unwirtschaftlicher Weise Ladekapazität verschenkt. Wird die Ladekapazität jedoch überschritten, können neben den sich aus der Überladung ergebenden Gefahren die Straßen durch herabfallenden Müll verschmutzt werden und schließlich kann auch die Brems- und Hydraulikanlage des Fahrzeugs überlastet werden.

Bereits aus der US-A-35 31 766 ist eine gattungsgemäße Vorrichtung zur Anzeige des Beladungszustandes von Lastwagen bekannt. Diese bekannte Anzeige des Beladungszustandes besteht im wesentlichen aus einem Elektromagneten, der an einer Achse fest angeklemmt ist und aus einem Stab, der an ein Trägerteil des Fahrzeugrahmens angeschweißt ist. Durch diese vorbekannte Anordnung der Anzeige des Beladungszustandes ergibt sich aber das Problem, daß das Abstandsverhältnis zwischen dem Stab und dem Elektromagneten bei der Erstmontage des LKWs fest eingestellt wird, sich allerdings während der Nutzung des Lastkraftwagens ein gebrauchsbedingtes Setzen der Blattfedern einstellt. Dadurch verringert sich der Abstand zwischen dem Fahrzeugrahmen und den Achsen, was bei der vorbekannten Anordnung zu einem zu fühen Auslösen des Warnsignals bei der Beladung des Lastkraftwagens führt.

Es stellt sich daher die Aufgabe, den gattungsgemäßen Stand der Technik derart weiterzubilden, daß eine einfach aufgebaute Vorrichtung an die Hand gegeben wird, bei der Meßfehler infolge des gebrauchsbedingten Setzens der Blattfedern des Lastkraftwagens ausgeglichen werden können.

Erfindungsgemäß wird diese Aufgabe bei einer Vorrichtung der gattungsgemäßen Art durch die Merkmale des kennzeichnenden Teils des Anspruchs 1 gelöst. Diese Vorrichtung zeichnet sich durch einen besonders einfachen Aufbau aus, weil die vorhandene Fahrzeugfederung zur Beurteilung des Beladungszustandes verwendet wird.

Üblicherweise sind Lastkraftwagen mit einem an einer Achse befestigten Gestänge versehen, das entsprechend der Einfederung des Fahrzeugrahmens eine lastabhängige Bremse steuert. Nach der Erfindung ist es vorgesehen, daß mit dem Gestänge der lastabhängigen Bremse ein Betätigungsglied verbunden ist, das einen Schalter oder einen Initiator betätigt oder aktiviert, wenn der Abstand zwischen dem Fahrzeugrahmen und der oder den Achsen auf ein Maß verringert worden ist, das dem Gewicht der höchstzulässigen Nutzlast entspricht.

Zweckmäßigerweise besteht das Betätigungsglied aus einem Blech o.dgl., das berührungslos mit einem induktiven Initiator zusammenwirkt. Eine derartige Einrichtung ist verschmutzungsunempfindlich.

In weiterer Ausgestaltung der Erfindung ist vorgesehen, daß der aktivierte Schalter oder Initiator einen Anzeigestromkreis schließt, wenn die Lkw-Bremse angezogen ist. Diese Ausgestaltung erhöht die Zuverlässigkeit der Anzeige, weil bei angezogener Lkw-Bremse grundsätzlich eine Anzeige nur im Ruhezustand des Fahrzeuges erfolgt, so daß dynamische Einflüsse, die sich beispielsweise aus schwingenden Bewegungen des Fahrzeugrahmens oder auf die Achsen wirkende Stöße ergeben können, ausgeschlossen sind.

Ein Ausführungsbeispiel der Erfindung wird nachstehend anhand der Zeichnung näher erläutert. In dieser zeigt

Fig.1 eine Rückansicht eines auf die Hinterachse abgestützten Fahrzeugrahmens eine Lastkraftwagens,

Fig.2 eine vergrößerte Darstellung des Gestänges der lastabhängigen Einstellvorrichtung der Bremse und

Fig.3 eine schematisch Darstellung des Stromkreises zur Anzeige des höchstzulässigen Gesamtgewichts.

Der den Aufbau oder die Ladefläche 1 tragende Fahrzeugrahmen 2 stützt sich in üblicher und daher nicht näher beschriebener Weise über die Blattfederpakete 3,4 auf die Fahrzeugachse 5 ab. Beim Beladen der Ladefläche 1, des Lastkraftwagens verringert sich entsprechend dem Gewicht der aufgenommenen Nutzlast der Abstand zwischen dem Fahrzeugrahmen 3 und der Achse 5.

An dem Fahrzeugrahmen 3 ist ein Regelventil 6 befestigt, das den zur Verfügung stehenden Bremsdruck der pneumatisch gebremsten Hinterachse steuert. An das freie Ende des schwenkbaren Stellhebels 7 des Regelventils 6 ist das obere Ende einer Stange 8 angelenkt, deren unteres Ende an der Achse 4 bzw. dem Gehäuse des Differentialgetriebes befestigt ist. Die Stange 8 verschwenkt infolgedessen entsprechend der Verringerung oder Vergrößerung des Abstandes zwischen dem Fahrzeugrahmen 2 und der Achse 5 den Betätigungshebel 7 des Regelventils 6 und stellt dadurch in Abhängigkeit von der Last den richtigen Bremsdruck ein.

Mit dem oberen Ende der Stange 8 ist ein Blechstück 9 verbunden, das mit dem induktiven Initiator 10 zusammenwirkt, der höhenverstellbar an dem Fahrzeugrahmen 2 befestigt ist. Sobald das Blechstück 9 in den Wirkbereich des Initiators 10 gelangt, erzeugt dieser durch die Änderung der Induktivität ein Signal, beispielsweise durch Schließen eines Schalters.

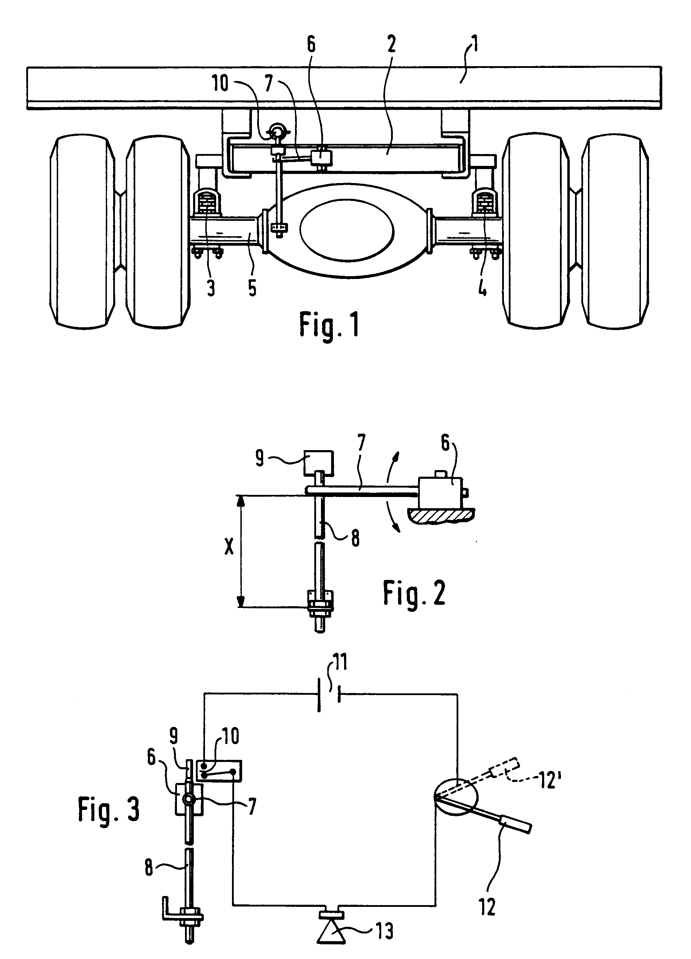

Der Initiator 10 ist, wie aus Fig. 3 ersichtlich, in einen Stromkreis eingeschaltet, der von der Fahrzeugbatterie 11 mit Strom gespeist wird. Der Stromkreis wird geschlossen, wenn von dem Initiator 10 und der Handbremse 12 betätigte Schalter geschlossen sind, so daß ein in dem Stromkreis liegender Signalgeber 13 den zur Anzeige erforderlichen Signalstrom erhält. Der von der Handbremse 12 betätigte Schalter wird geschlossen, wenn die Handbremse in ihre gestrichelt eingezeichnete angezogene Stellung 12′ bewegt wird.

Der Initiator 10 wird so einjustiert, daß das Blech 9 in dessen Wirkbereich gerät, wenn der Lastkraftwagen die höchstzulässige Nutzlast aufgenommen hat und der Fahrzeugrahmen entsprechend eingefedert ist.

Nach einer erforderlichen Grundeinstellung des Initiators 10 ist eine genaue Anzeige dadurch gewährleistet, daß im Rahmen der gesetzlich vorgeschriebenen halbjährlichen Bremsuntersuchungen das Maß X des Übertragungsgestänges der lastabhängigen Bremse erforderlichenfalls nachgestellt werden kann.

Der der jeweiligen Einfederung entsprechende Abstand zwischen dem Fahrzeugrahmen 2 und der Achse 5 kann zur Anzeige des Beladungszustandes bzw. des Erreichens des höchstzulässigen Gesamtgewichts auch mit anderen Übertragungseinrichtungen und Schaltern zur Anzeige gebracht werden.

**Patentansprüche**

1. Beladungszustandsanzeigevorrichtung von LKW, vorzugsweise des Gewichts der aufgenommenen Nutzlast von Müllsammelfahrzeugen, deren Fahrzeugrahmen (2) relativ zu den Achsen (5) beweglich und auf diesen durch Federn (3, 4) abgestützt sind, wobei ein den Abstand zwischen dem Fahrzeugrahmen (2) und der oder den Achsen (3, 4) erfassende Einrichtung vorgesehen ist, die ein Signal erzeugt, wenn der Abstand auf ein Maß verringert worden ist, das dem Gewicht der höchstzulässigen Nutzlast entspricht,
**dadurch gekennzeichnet,**
daß die den Abstand erfassende Einrichtung ein an einer Achse befestigtes Gestänge (7, 8) enthält, das entsprechend der Einfederung des Fahrzeugrahmens lastabhängig die Fahrzeugbremse steuert, wobei mit dem Gestängeteil (8) ein Betätigungsglied (9) verbunden ist, das einen Schalter oder einen Initiator (10) für die Anzeige des Beladungszustandes betätigt, wenn der Abstand zwischen dem Fahrzeugrahmen (2) und der oder den Achsen (5) auf ein Maß verringert worden ist, das dem zulässigen Gesamtgewicht entspricht und das die Übertragungslänge (X) des Gestängeteils (8) einstellbar ist.

2. Vorrichtung nach Anspruch 1, dadurch gekennzeichnet, daß das Betätigungsglied aus einem Blech (9) oder dergleichen besteht, das Berührungslos mit einem induktiven Initiator (10) zusammenwirkt.

3. Vorrichtung nach Anspruch 1 oder 2, dadurch gekennzeichnet, daß der aktivierte Schalter oder der Initiator (10) einen Anzeigestromkreis schließt, wenn die LKW-Handbremse (12) angezogen ist.

**Claims**

1. Apparatus for indicating the loading of trucks, particularly the weight of the useful load which has been picked up by garbage collecting trucks, which trucks have a vehicle frame (2) which is movable relative to the axles (5) and is supported on the axles by springs (3, 4), wherein a device is provided which detects the distance between the vehicle frame (2) and the axle or axles (5), said device producing a signal when the distance has been reduced to an extent which corresponds to the weight of the highest permissible useful load,
**characterized in**
that the distance-detecting device comprises a linkage (7, 8) which is secured to an axle and which controls the brake of the truck in a load-dependent manner and in dependence on the spring-suspension movement of the vehicle frame, wherein an actuating member (9) is connected to the linkage member (8), which activates a swish or an initiator (10) for indicating the loading state when the distance between the vehicle frame (2) and the axle or axles (5) has been reduced to an extent which corresponds to the weight of the highest permissible useful load, and that the effective length (X) of the linkage member (8) is adjustable.

2. Apparatus according to claim 1, characterized in that the actuating member consists of a sheet metal (9) or the like, which cooperates in an non-contacting manner with an inductive initiator (10).

3. Apparatus according to claim 1 or 2, characterized in that the activated switch or initiator (10) closes an indicating circuit when the hand brake (12) of the truck is applied.

**Revendications**

1. Dispositif d'indication de l'état de chargement de camions, de préférence du poids de la charge utile ramassée par des véhicules de collecte d'ordures dont les châssis de véhicules (2) sont supportés mobiles relativement aux axes (5) et sur ceux-ci par des ressorts (3, 4), ou un dispositif captant l'écart entre le châssis de véhicule (2) et le ou les axes (3, 4) est prévu qui produit un signal lorsque l'écart est réduit à une mesure qui correspond au poids de la charge utile admissible maximale,
**caractérisé**
en ce que le dispositif détectant l'écart comprend une tringlerie (7, 8) fixée à un axe qui commande le frein du véhicule en fonction de la charge conformément à la compression du ressort du châssis du véhicule, un élément d'actionnement (9) étant relié à la pièce de tringlerie (8) et qui actionne un interrupteur ou un initiateur (10) pour l'indication de l'état de chargement lorsque l'écart entre le châssis du véhicule (2) et le ou les axes (5) a diminué pour atteindre une mesure qui correspond au poids total admissible et en ce que la longueur de transmission (X) de la pièce de tringlerie (8) est réglable.

2. Dispositif selon la revendication 1, caractérisé en ce que l'élément d'actionnement est constitué d'une tôle (9) ou analogue qui coopère avec un initiateur inductif (10) sans venir au contact de celui-ci.

3. Dispositif selon la revendication 1 ou 2, caractérisé en ce que l'interrupteur activé ou l'initiateur (10) ferme un circuit indicateur lorsque le frein à main du camion (12) est serré.

Fig. 1

Fig. 2

Fig. 3